(19) Europäisches Patentamt / European Patent Office / Office européen des brevets

(11) **EP 4 708 542 A1**

(12) **EUROPEAN PATENT APPLICATION**
published in accordance with Art. 153(4) EPC

(43) Date of publication:
**11.03.2026  Bulletin 2026/11**

(21) Application number: **24799826.3**

(22) Date of filing: **12.01.2024**

(51) International Patent Classification (IPC):
***H01M 50/491*** (2021.01)

(52) Cooperative Patent Classification (CPC):
Y02E 60/10

(86) International application number:
**PCT/CN2024/072054**

(87) International publication number:
**WO 2024/227368 (07.11.2024 Gazette 2024/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **04.05.2023  CN 202310490928**

(71) Applicant: **Contemporary Amperex Technology Co., Limited**
**Ningde, Fujian 352100 (CN)**

(72) Inventors:
• **OUYANG, Shaocong**
  **Ningde, Fujian 352100 (CN)**
• **SUN, Jingxuan**
  **Ningde, Fujian 352100 (CN)**
• **TANG, Zheng**
  **Ningde, Fujian 352100 (CN)**
• **XU, Baoyun**
  **Ningde, Fujian 352100 (CN)**
• **YE, Yonghuang**
  **Ningde, Fujian 352100 (CN)**

(74) Representative: **Kraus & Lederer PartGmbB**
**Thomas-Wimmer-Ring 15**
**80539 München (DE)**

(54) **SEPARATOR FOR SODIUM BATTERY, SECONDARY BATTERY, AND ELECTRICAL APPARATUS**

(57)    The present application relates to the field of battery technologies, and specifically, to a separator for a sodium battery, a secondary battery, and an electric apparatus. The separator for the sodium battery has a first surface and a second surface along its thickness direction, and a porosity of the separator decreases gradually from the first surface to the second surface. The separator with this structure has a certain rigidity, facilitating its ability to resist swelling and deformation of a positive electrode plate and a negative electrode plate to a certain extent, while also having a certain compressibility, effectively ensuring sufficient infiltration of an electrolyte, thereby mitigating the rapid degradation of the cycle life of a battery caused by volume swelling during the use of the sodium battery.

FIG. 6

**Description**

**CROSS-REFERENCE TO RELATED APPLICATIONS**

The present application claims priority to Chinese Patent Application No. 2023104909281, filed on May 04, 2023, and entitled "SEPARATOR FOR SODIUM BATTERY, SECONDARY BATTERY, AND ELECTRIC APPARATUS", which is incorporated herein by reference in its entirety.

**TECHNICAL FIELD**

The present application relates to the field of battery technologies, and specifically, to a separator for a sodium battery, a secondary battery, and an electric apparatus.

**BACKGROUND**

With the increasing application of lithium-ion battery technology in markets such as consumer electronics, electric vehicles, and energy storage, the issue of insufficient lithium resources has become prominent. Sodium batteries have gradually gained attention due to the abundant reserves of sodium, holding significant strategic importance in cost-sensitive applications such as energy storage. Additionally, under the same electrolyte concentration, sodium batteries exhibit higher conductivity than lithium batteries, further reducing production costs.

However, due to the higher reduction potential and larger relative molecular mass of sodium metal compared to lithium metal, the energy density of sodium batteries, which operate on a similar principle, is significantly lower than that of lithium batteries. Meanwhile, the larger ionic radius of sodium ions compared to lithium ions results in greater volume swelling during intercalating and deintercalating in positive and negative electrode materials. Some irreversible swelling can easily cause the separator to be compressed, leading to rapid degradation of the cycle performance of the batteries.

**SUMMARY**

In view of the above issues, the present application provides a separator for a sodium battery, a secondary battery, and an electric apparatus, which can mitigate the rapid degradation of the cycle life of a battery caused by volume swelling during the use of sodium batteries.

According to a first aspect, the present application provides a separator for a sodium battery, where the separator has a first surface and a second surface along its thickness direction, and a porosity of the separator decreases gradually from the first surface to the second surface.

The separator with this structure has a certain rigidity, facilitating its ability to resist swelling and deformation of positive and negative electrode plates to a certain extent. The separator also has a certain compressibility, enabling sufficient and effective infiltration of an electrolyte before compression and effectively and promptly release of the electrolyte after compression, thereby mitigating the rapid degradation of the cycle life of a battery caused by volume swelling during the use of the sodium battery.

In some embodiments, a porosity of the first surface is greater than or equal to 50% and less than or equal to 70%, and a porosity of the second surface is greater than or equal to 30% and less than 50%.

In addition to ensuring the function of conducting internal ions and preventing direct contact between the positive and negative electrode plates, the separator also needs to satisfy a gradient change in porosity along its thickness direction. Influenced by factors such as material, preparation process, and the performance of the separator itself, the porosity of the first surface is greater than or equal to 50% and less than or equal to 70%, and the porosity of the second surface is greater than or equal to 30% and less than 50%.

In some embodiments, a thickness H of the separator is 5 $\mu$m to 30 $\mu$m.

Within this thickness range, it is easier to achieve a gradient change in the porosity of the separator along the thickness direction.

In some embodiments, the porosity of the separator is denoted as q, and the separator has a full-charge thickness rebound rate $\alpha$, satisfying any one of the following:

(1)

$$30\% \leq q \leq 40\%, \text{ and } \alpha \leq 100\%;$$

(2)

$$40\% < q < 60\%, \text{ and } 100\% < \alpha < 200\%;$$

and

(3)

$$60\% \leq q \leq 70\%, \text{ and } \alpha \geq 200\%.$$

The separator of the present application swells after the battery is fully charged, which can suppress negative electrode swelling to some extent.

In some embodiments, the separator includes a base film, and a porosity of the base film decreases gradually along its thickness direction.

When the separator only includes the base film, and the material and preparation process allow that the porosity of the base film can be designed to have a gradient change along its thickness direction.

In some embodiments, the separator includes a base film and a composite layer located on one side surface of the base film, where a porosity of the base film is less than a porosity of the composite layer.

When the separator includes both a base film and a composite layer, to meet the requirement of a gradient change in porosity of the separator along the thickness direction, the porosity of the base film is not consistent with the porosity of the composite layer. From a preparation process perspective, it is technically easier to design the porosity of the base film to be less than that of the composite layer.

In some embodiments, the composite layer includes one or more coatings.

In some embodiments, the composite layer includes one coating, where the coating has a third surface close to the base film, and the porosity of the coating decreases gradually from the first surface to the third surface.

When the composite layer includes one coating, and the porosity of the base film is less than the porosity of the coating, designing the porosity of the coating to have a gradient change is easier to operate and achieve in the preparation process.

In some embodiments, the porosity $q1$ of the base film is 30% to 40%, and a full-charge thickness rebound rate $\alpha1$ of the base film is less than or equal to 100%;

and/or;

a porosity $q2$ of the coating is 40% to 70%, and a full-charge thickness rebound rate $\alpha2$ of the coating is greater than or equal to 100%.

In some embodiments, the composite layer includes two or more coatings, where the porosity of the base film is less than the porosity of the coating closest to the base film, and the porosity of the coating closest to the base film is less than the porosity of the coating away from the base film.

When the composite layer includes two or more coatings, since the layer structure of the separator includes three or more layers, designing different porosities for each layer not only facilitates implementation but also meets the requirement for a gradient change in porosity of the separator along the thickness direction.

In some embodiments, the raw material of the base film includes, but is not limited to, any conventional material in the field, such as one or more of polypropylene, polyethylene, polyimide, polyamide, polyethylene terephthalate, polyvinylidene fluoride, or cellulose-based substrates.

In some embodiments, a porosity $q1'$ of the base film is 30% to 40%, and a full-charge thickness rebound rate $\alpha1'$ of the base film is less than or equal to 100%;

and/or;

a porosity $q2'$ of the coating closest to the base film is 35% to 50%, and a full-charge thickness rebound rate $\alpha2'$ of the coating closest to the base film satisfies:

$$90\% \leq \alpha2' \leq 180\%;$$

and/or;

a porosity $q3'$ of the coating away from the base film is 50% to 70%, and a full-charge thickness rebound rate $\alpha2'$ of the coating away from the base film is greater than or equal to 180%.

In some embodiments, a thickness D of the composite layer and the thickness H of the separator satisfy: $D < 0.5 \times H$.

In the present application, the thickness of the composite layer is designed to be less than half the thickness of the separator. This is because the separator primarily relies on the base film to perform its function of conducting internal ions and isolating direct contact between the positive and negative electrode plates. The composite layer only serves to improve the usage effects, such as cycle performance. If the thickness of the composite layer is designed to be greater than the thickness of the base film, it is not conducive to the base film performing its function.

In some embodiments, the raw material of the coating includes, but is not limited to, any conventional form in the field, such as a coating including a film layer on a surface of the base film from at least one of inorganic particles, organic particles, or organic-inorganic hybrid particles. The inorganic particles include, but are not limited to, boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, or barium titanate. The organic particles include, but are not limited to, at least one of polyethylene particles, polypropylene particles, polystyrene particles, polyvinylidene fluoride particles, cellulose, cellulose modifiers (for example, carboxymethyl cellulose), melamine resin particles, phenolic resin particles, polyester particles (for example, polyethylene terephthalate, polyethylene naphthalate, and polybutylene terephthalate), organosilicon resin particles, polyimide particles, polyamide-imide particles, polyaramid particles, polyphenylene sulfide particles, polysulfone particles, polyethersulfone particles, polyether-ether-ketone particles, polyaryl-ether-ketone particles, or butyl acrylate-ethyl methacrylate copolymer (for example, crosslinking copolymer of butyl acrylate and ethyl methacrylate).

According to a second aspect, the present application provides a secondary battery, including:

> a positive electrode plate;
> a negative electrode plate;
> an electrolyte; and
> the separator described in the first aspect;
> where the first surface of the separator is close to a negative electrode plate, and the second surface is close to a positive electrode plate.

The present application selects the porosity of the first surface to be greater than the porosity of the second surface, with the first surface facing the negative electrode plate and the second surface facing the positive electrode plate. This is because, during cycling of a battery, some sodium ions cannot fully deintercalate from the negative electrode and deposit as insoluble byproducts on the surface of the negative electrode plate. On one hand, the insoluble byproducts continuously consume the electrolyte; and on the other hand, the increased thickness of the negative electrode plate inevitably deteriorates the liquid retention capacity of the separator after compression. By placing the end of the separator with relatively higher porosity facing the negative electrode plate, the relatively higher porosity can first store the electrolyte, and upon compression and deformation, the adverse effects caused by reduced electrolyte can be mitigated.

When volume swelling of the positive and negative electrode plates exerts an external force on the separator, the separator initially relies on its elastic modulus to provide a certain degree of compression resistance. As the degree of compression from the positive and negative electrode plates increases, the separator, relying on its elastic modulus, is compressed, and the thickness decreases. As the intercalation and deintercalation of the positive and negative electrode materials continue, the degree of compression from the positive and negative electrode plates decreases, and the separator, relying on its elastic modulus, effectively recovers its thickness and achieves sufficient and effective infiltration of the electrolyte, thereby mitigating the rapid degradation of the cycle life of a battery caused by volume swelling during the use of the sodium battery and prolonging the cycle life of the sodium battery.

According to a third aspect, the present application provides an electric apparatus, where the electric apparatus includes the separator described in the first aspect or the secondary battery described in the second aspect.

BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. Throughout the accompanying drawings, the same reference signs represent the same components. In the drawings:

> FIG. 1 is a schematic structural diagram of a separator in some embodiments of the present application;
> FIG. 2 is a schematic structural diagram of a separator in some embodiments of the present application;
> FIG. 3 is a schematic structural diagram of a separator in some embodiments of the present application;
> FIG. 4 is a schematic structural diagram of a separator in some embodiments of the present application;
> FIG. 5 is a schematic structural diagram of a separator in some embodiments of the present application; and

FIG. 6 is a schematic diagram of a positional relationship between a separator, a negative electrode plate, and a positive electrode plate in some embodiments of the present application.

Reference signs in specific embodiments are described as follows:

100. separator; 200. negative electrode plate; 300. positive electrode plate;
101. first surface; 102. second surface; 103. third surface;
110. base film; 120. composite layer;
1201. coating; 1202. first coating; 1203. second coating;
coordinate axis x: thickness direction of the separator; and
coordinate axis y: length or width direction of the separator.

## DETAILED DESCRIPTION

The following describes in detail embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the description of the embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of the present application, "multiple" means more than two, unless otherwise specifically defined. Similarly, "multiple groups" means more than two (inclusive) groups, and "multiple pieces" means more than two (inclusive) pieces.

In this specification, reference to "embodiment" means that specific features, structures, or characteristics described with reference to the embodiment may be included in at least one embodiment of the present application. The word "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the descriptions of the embodiments of the present application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between contextually associated objects.

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of the present application.

In the description of the embodiments of the present application, technical terms such as "composite" or "composite layer" include any composite form in the field of materials for forming a composite layer. Persons of ordinary skills in the art can understand specific meanings of these terms in the present application as appropriate to specific situations.

The content of lithium in the Earth's crust is only 0.0065%, while the content of sodium is as high as 2.64%, giving sodium batteries a natural cost advantage over lithium batteries. However, a standard electrode potential of sodium is 0.33V higher than that of lithium, and its atomic weight and ionic radius are also larger than those of lithium. During the charge-discharge cycle of sodium batteries, some irreversible reactions occur along with the intercalation and deintercalation of positive and negative electrode materials, and the reaction products are deposited on the surface of the negative electrode plate as insoluble byproducts, easily causing irreversible swelling of the battery.

During cell encapsulation, the dimensions of the wound cell or laminated cell match a battery cell housing appropriately, for example, with thicknesses within a certain tolerance range. The above irreversible swelling inevitably causes the wound cell or laminated cell to swell. When this swelling is subjected to stress from the battery cell housing, it causes the separator in the wound cell or laminated cell to be compressed, resulting in a reduced thickness. The separators currently used in sodium batteries cannot effectively recover the thickness with the intercalation and deintercalation of positive and negative electrode materials after compression. If the separator remains unrecovered for an extended period, the infiltration degree of the separator on the electrolyte is inevitably affected, leading to rapid degradation of the cycle performance of sodium batteries.

Currently, by modifying the material or improving the structure of separators used in sodium batteries, so that the swelling and deformation of positive and negative electrode plates can be resisted. Studies have found that for porous materials with uniform porosity, such as a separator, a higher porosity improves the infiltration degree of the electrolyte and reduces the ability to resist swelling and deformation of the positive and negative electrode plates. Conversely, a lower porosity improves the ability to resist the swelling and deformation of the positive and negative electrode plates, the infiltration degree of the electrolyte is not guaranteed, and the requirements for the material and the preparation process of the separator having a suitable porosity are explored. Further studies have found that if the porosity of the separator used in sodium batteries is designed to have a gradient change along a certain direction, for example, with higher porosity on one side of the separator and lower porosity on another side along a certain direction, then the separator with this structure can balance both the infiltration degree of the electrolyte and ability to resist the swelling and deformation of the positive and negative electrode plates.

Based on the above considerations, to mitigate the rapid degradation of the cycle life of a battery caused by volume swelling during the use of sodium batteries, the present application designs a separator for a sodium battery. The separator has a first surface and a second surface along its thickness direction, with the porosity decreasing gradually from the first surface to the second surface. The porosity of the separator exhibits a gradient decrease along its thickness direction. The separator with this structure has a certain rigidity. When the separator is used in the sodium battery, this facilitates achieving ability to resist the swelling and deformation of the positive and negative electrode plates to a certain extent. Additionally, the separator has a certain compressibility, enabling the separator to achieve sufficient and effective infiltration of the electrolyte before compression and to release the electrolyte effectively and promptly after compression. Thus, the separator designed in the present application can mitigate the rapid degradation of the cycle life of a battery caused by volume swelling during the use of sodium batteries.

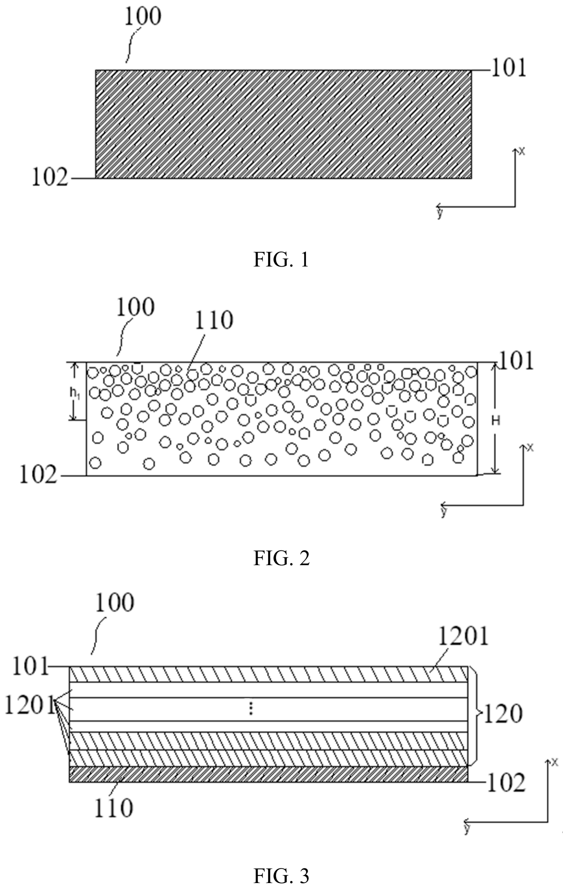

According to some embodiments of the present application, the present application provides a separator 100 for a sodium battery as shown in FIG. 1. The separator 100 has a first surface 101 and a second surface 102 along its thickness direction, where the thickness direction may be a coordinate axis x direction shown in FIG. 1. The first surface 101 and the second surface 102 are disposed opposite each other, and the first surface 101 and/or the second surface 102 are respectively used for interfacial contact with the positive and negative electrode plates. The porosity of the separator 100 decreases gradually from the first surface 101 to the second surface 102.

The definition of porosity includes definitions in the field of materials. In the drawings of the present application, the number of pores is used to represent porosity, but the drawings are only schematic and do not represent the actual number. The method for measuring porosity can be calculated using the following test method, or other conventional methods in the field can be used to measure or calculate:

For example, a dried separator sample is cut into a square sample of approximately 20 mm × 20 mm. The thickness and actual side length are measured using a digital micrometer and vernier caliper to calculate the volume V thereof, and the weight $M_0$ thereof is measured. The square sample is then immersed in the electrolyte, soaked for 2 h at room temperature in an air atmosphere, and removed. The electrolyte liquid adsorbed on the surface is wiped off, and the weight $M_t$ thereof is measured. The porosity of the separator satisfies the following mathematical relationship:

$$\text{Porosity} = \frac{(M_t - M_0)/\rho}{V} \times 100\%$$

In the above mathematical relationship, $\rho$ is the density of the electrolyte in mm$^3$/g, V is the volume of the square sample of the separator in mm$^3$, and the weights $M_0$ and $M_t$ are in grams. The weight measurement instrument is one-thousandth of the balance, and the models of the one-thousandth of the balance, digital micrometer, and vernier caliper include, but are not limited to, any conventional models in the field.

The gradient decrease includes the variation pattern of the porosity of the separator along its thickness direction, where the gradient includes a linear or nonlinear relationship. For example, linear decrease includes, but is not limited to, any conventional form of linear variation in the field, such as a rate of decrease in porosity along the thickness direction of the separator being uniformly constant. Nonlinear decrease includes, but is not limited to, any conventional form of nonlinear decrease in the field, such as exponential decrease where the rate of decrease in porosity along the thickness direction of the separator is initially larger and then smaller, or logarithmic change where the rate of decrease in porosity along the thickness direction of the separator is initially smaller and then larger.

The separator with this structure has a certain rigidity. Under this rigidity, the separator can resist an external force caused by the swelling and deformation of the positive and negative electrode plates to a certain extent during use. Additionally, the separator has a certain compressibility, enabling sufficient and effective infiltration of an electrolyte before compression and effectively and promptly release of the electrolyte after compression. For example, during the use of the separator, when the volume swelling of the positive and negative electrode plates exerts external force on the separator, the separator first relies on its rigidity to provide a certain degree of compression resistance. As the compression from the positive and negative electrode plates increases, the separator is compressed, and the thickness decreases. As the intercalation and deintercalation of the positive and negative electrode materials continue, the degree of compression from the electrode plates decreases, and the separator relies on its compression resistance, effectively recovering its thickness and achieving sufficient and effective infiltration of the electrolyte, thereby mitigating the rapid degradation of the cycle life of a battery caused by volume swelling during the use of sodium batteries and improving the cycle life of sodium batteries.

According to some embodiments of the present application, the porosity of the first surface is greater than or equal to 50% and less than or equal to 70%; and the porosity of the second surface is greater than or equal to 30% and less than 50%.

The porosity of the first surface and the porosity of the second surface can be obtained by slicing to obtain slice samples. Images of the slice samples and the pore volumes of the slice samples can be obtained using a CCD camera/scanning electron microscope, and the porosity of the slice samples can be calculated. Alternatively, slice samples having a certain thickness can be obtained by slicing and calculated using the above method for testing the porosity of the separator. The present application also includes other methods for obtaining the porosity of the first surface and the porosity of the second surface.

The present application selects the porosity of the first surface to be greater than the porosity of the second surface, where a relatively high porosity at the first surface facilitates the infiltration of the electrolyte by the separator, and a relatively low porosity at the second surface facilitates resistance to external forces caused by the swelling and deformation of the positive and negative electrode plates to a certain extent.

Based on factors such as material, preparation process, and the functional requirements of the separator, the present application specifically selects the porosity of the first surface to be greater than or equal to 50% and less than or equal to 70%. If the porosity of the first surface is less than 50%, since the typical porosity of separators is between 30% and 50%, it is not conducive to designing a gradient change in the porosity of the separator. If the porosity of the first surface is greater than 70%, it is difficult to achieve in the preparation process.

According to some embodiments of the present application, a thickness H of the separator is 5 $\mu$m to 30 $\mu$m.

As shown in FIG. 1, the thickness H of the separator 100 is the distance between the first surface 101 and the second surface 102, and the thickness value can be obtained by direct measurement, such as using a micrometer to measure a film thickness. The present application may select the thickness H of the separator to be any one of 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, 21 $\mu$m, 22 $\mu$m, 23 $\mu$m, 24 $\mu$m, 25 $\mu$m, 26 $\mu$m, 27 $\mu$m, 28 $\mu$m, 29 $\mu$m, or 30 $\mu$m, or any value within the above range. If the thickness of the separator is less than 5 $\mu$m, it may affect the implementation of its function. If the thickness of the separator is greater than 30 $\mu$m, the requirements for selecting the composite layer and the limitations of the preparation process become more stringent. The present application ultimately selects the thickness H of the separator to be 5 $\mu$m to 30 $\mu$m, as within this thickness range, it is easier to achieve a gradient change in the porosity of the separator along the thickness direction.

According to some embodiments of the present application, the porosity of the separator is denoted as q, and the separator has a full-charge thickness rebound rate $\alpha$, satisfying any one of the following:

(1)

$$30\% \leq q \leq 40\%, \text{ and } \alpha \leq 100\%;$$

(2)

$$40\% < q < 60\%, \text{ and } 100\% < \alpha < 200\%;$$

and
(3)

$$60\% \leq q \leq 70\%, \text{ and } \alpha \geq 200\%.$$

The porosity q of the separator in the present application includes an average porosity of the separator, and the average porosity can be directly measured using the above measurement method.

The full-charge thickness rebound rate in the present application includes measurements obtained using conventional methods in the field. For example, the original thickness of the separator is measured as H0, and then the fully-charged assembled battery is disassembled, the thickness of the separator after fully charged is measured as H1. The thickness rebound rate $\alpha$ of the separator is calculated as $\alpha$ = (H1 - H0) / H0 $\times$ 100%.

It can be seen from the above that the separator of the present application swells after the battery is fully charged, which can suppress negative electrode swelling to some extent. Therefore, the separator has both the ability to resist swelling and deformation of the positive and negative electrode plates and ensures its infiltration of the electrolyte. This is conducive to mitigating the rapid degradation of the cycle life of a battery caused by volume swelling during the use of sodium batteries.

According to some embodiments of the present application, the separator includes a base film. As shown in FIG. 2, the separator 100 includes only a base film 110, where the base film 110 has a first surface 101 and a second surface 102 along its thickness direction, and the porosity of the base film 110 decreases gradually from the first surface 101 to the second surface 102. The gradient here is consistent with the above definition.

Since the separator 100 includes only the base film 110, the thickness H of the separator 100 is the thickness of the base film 110. As shown in FIG. 2, at a position with a certain distance $h_1$ from the first surface 101 of the separator 100, the porosity is located between the porosity of the first surface and the porosity of the second surface. Additionally, the material of the base film 110 includes, but is not limited to, any conventional material in the field, such as polypropylene, polyethylene, polyimide, polyamide, polyethylene terephthalate, polyvinylidene fluoride, or cellulose-based substrates. The listed materials include any conventional manufacturer or model in the field. The present application starts with base film that can easily form a gradient porosity structure with the above characteristics, and the material of the base film includes, but is not limited to, any one of polypropylene, polyethylene, polyimide, or polyethylene terephthalate.

For the preparation process of the separator shown in FIG. 2, the present application includes, but is not limited to, using conventional dry or wet processes in the field, with repeated stretching during stretching to achieve a gradient change in the porosity of the separator along its thickness direction.

According to some embodiments of the present application, the separator includes not only the base film. As shown in FIG. 3, the separator 100 includes a base film 110 and a composite layer 120 located on one side surface of the base film 110, where the thickness of the separator 100 is H, the thickness of the composite layer 120 is D, and D and H satisfy: D < 0.5 $\times$ H. The porosity of the composite layer 120 is greater than the porosity of the base film 110.

The present application designs the thickness of the composite layer to be less than half the thickness of the separator. This is because the separator primarily relies on the base film to perform its function of conducting internal ions and isolating direct contact between the positive and negative electrode plates. The composite layer only serves to improve the usage effects, such as cycle performance. If the thickness of the composite layer is designed to be greater than the thickness of the base film, it is not conducive to the base film performing its function.

As shown in FIG. 3, the composite layer 120 includes one or more coatings 1201, where the coating 1201 includes, but is not limited to, being formed on one side surface of the base film 110 by coating. In FIG. 3, "..." in the coating 1201 indicates possible coatings not specifically listed. The material of the coating 1201 includes, but is not limited to, any conventional form in the field, such as a coating including a film layer on a surface of the base film from at least one of inorganic particles, organic particles, or organic-inorganic hybrid particles. The inorganic particles include, but are not limited to, boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, or barium titanate. The organic particles include, but are not limited to, at least one of polyethylene particles, polypropylene particles, polystyrene particles, polyvinylidene fluoride particles, cellulose, cellulose modifiers (for example, carboxymethyl cellulose), melamine resin particles, phenolic resin particles, polyester particles (for example, polyethylene terephthalate, polyethylene naphthalate, and polybutylene terephthalate), organosilicon resin particles, polyimide particles, polyamide-imide particles, polyaramid particles, polyphenylene sulfide particles, polysulfone particles, polyethersulfone particles, polyether-ether-ketone particles, polyaryl-ether-ketone particles, or butyl acrylate-ethyl methacrylate copolymer (for example, crosslinking copolymer of butyl acrylate and ethyl methacrylate).

The listed coating materials are all applicable to the present application, provided the formation process allows and it is easy to form a separator with a gradient change in porosity.

The coating material in the present application is a film layer formed on the surface of the base film from organic-inorganic hybrid particles, where the organic particles include, but are not limited to, polyvinylidene fluoride particles, and the inorganic particles include, but are not limited to, any one of aluminum oxide, zinc oxide, silicon oxide, titanium oxide, zirconium oxide, barium oxide, calcium oxide, or magnesium oxide, with a mass ratio of organic particles to inorganic particles of (90-95):(10-5). Due to preparation process limitations, the present application specifically investigates the porosity changes of the coating formed when the mass ratio of organic particles to inorganic particles is (90-95):(10-5).

The composite layer is used to describe a film layer formed on one side surface of the base film, and the composite methods of the composite layer in the present application include, but are not limited to, any conventional form in the field, such as coating or deposition. The listed coating, deposition, and other processes include any conventional form in the field.

By designing the porosity of the base film 110 to be different from the porosity of the composite layer 120, it facilitates achieving a separator that not only ensures the infiltration degree of electrolyte but also has a certain ability to resist the swelling and deformation of the positive and negative electrode plates.

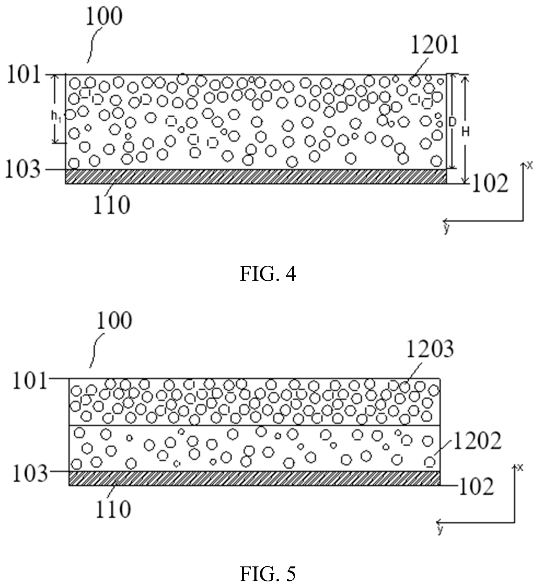

According to some embodiments of the present application, it can be seen from FIG. 4 that the separator 100 includes a base film 110 and one coating 1201 located on one side surface of the base film 110. The coating 1201 includes a third surface 103 close to the base film 110, and the end face away from the base film 110 is the first surface 101 of the separator 100. The porosity of the coating 1201 decreases gradually from the first surface 101 to the third surface 103. The gradient here is consistent with the above definition.

The preparation process of the separator shown in FIG. 4 includes, but is not limited to, using conventional dry or wet processes in the field to prepare the base film, and coating one side surface of the base film with a slurry to prepare the coating, controlling different solid contents of the slurry to achieve a gradient change in the porosity of the coating. The solid content of the slurry refers to the mass percentage of the remaining portion after drying the slurry under specified conditions, which can be calculated through experimentation. The coating method includes, but is not limited to, any conventional form in the field, such as gravure roll coating. In this embodiment, a gradient design of the porosity of the composite layer is achieved, it is easier to achieve from a preparation process perspective, and this design has a relatively small impact on the other performance of the separator in the battery.

In some embodiments of the present application, when including one coating, the porosity $q1$ of the base film is 30% to 40%, and the full-charge thickness rebound rate $\alpha1$ of the base film is less than or equal to 100%;
and/or;
the porosity $q2$ of the coating is 40% to 70%, and the full-charge thickness rebound rate $\alpha2$ of the coating is greater than or equal to 100%.

According to some embodiments of the present application, as shown in FIG. 5, the separator 100 includes a base film 110 and two coatings 1201 located on one side surface of the base film 110, that is, a first coating 1202 and a second coating 1203, where the first coating 1202 is disposed close to the base film 110, the second coating 1203 is disposed away from the base film 110, the porosity of the base film 110 is less than the porosity of the first coating 1202, and the porosity of the first coating 1202 is less than the porosity of the second coating 1203. The preparation process of the separator designed in this embodiment includes, but is not limited to, using conventional dry or wet processes in the field to prepare the base film, preparing coating slurries with different solid contents, and sequentially coating these slurries with different solid contents on one side surface of the base film under conditions that satisfy the porosity distribution.

In some embodiments of the present application, when including two coatings, the porosity $q1'$ of the base film is 30% to 40%, and the full-charge thickness rebound rate $\alpha1'$ of the base film is less than or equal to 100%;
and/or;

the porosity $q2'$ of the first coating is 35% to 50%, and the full-charge thickness rebound rate $\alpha2'$ of the first coating satisfies: $90\% \leq \alpha2' \leq 180\%$;
and/or;
the porosity $q3'$ of the second coating is 50% to 70%, and the full-charge thickness rebound rate $\alpha2'$ of the second coating is greater than or equal to 180%.

The present application also includes forming three or more coatings on one side surface of the base film, with the design method consistent with that of the two coatings described above. The present application achieves a gradient change in the porosity of the composite layer formed by the coatings by controlling different solid contents of the coating slurries. The gradient here is consistent with the above definition.

According to a second aspect, the present application also discloses a secondary battery, including a positive electrode plate, a negative electrode plate, an electrolyte, and the separator described in the first aspect. The first surface of the separator is close to the negative electrode plate, and the second surface is close to the positive electrode plate. In the present application, the end of the separator with relatively higher porosity faces the negative electrode plate, and the end with relatively lower porosity faces the positive electrode plate. This is because, during cycling of a battery, some sodium ions cannot fully deintercalate from the negative electrode and deposit as insoluble byproducts on the surface of the negative electrode plate. On one hand, the insoluble byproducts continuously consume the electrolyte; and on the other hand, the increased thickness of the negative electrode plate inevitably deteriorates the liquid retention capacity of the separator after compression. By placing the end of the separator with relatively higher porosity facing the negative electrode plate, the relatively higher porosity can first store the electrolyte, and upon compression and deformation, the adverse effects caused by reduced electrolyte can be mitigated.

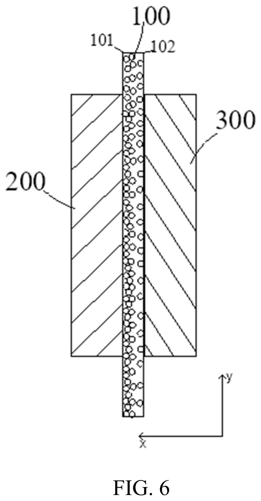

As shown in FIG. 6, by disposing the first surface 101 of the separator 100 close to the negative electrode plate 200 and the second surface 102 close to the positive electrode plate 300, that is, the end face of the separator 100 with higher porosity is disposed close to the negative electrode plate 200, and the end face with lower porosity is disposed close to the positive electrode plate 300, it is conducive to resisting to external force caused by the swelling and deformation of the positive and negative electrode plates to a certain extent and is conducive to the infiltration of the electrolyte by the separator.

The separator with this structure has a certain rigidity and compressibility, thereby achieving the ability to resist a certain degree of compression from the positive and negative electrode plates to a certain extent while achieving sufficient and effective infiltration of the electrolyte. For example, when the separator is subjected to a certain degree of compression from the negative electrode plate, it first relies on its rigidity to resist compression. As the degree of compression from the negative electrode plate increases, the separator is compressed, and the thickness decreases. As the intercalation and deintercalation of the positive and negative electrode materials continue, the degree of compression from the negative electrode plate decreases, and the separator, relies on its elastic modulus, effectively recovering its thickness and achieving sufficient and effective infiltration degree of the electrolyte, thereby mitigating the rapid degradation of the cycle life of a battery caused by volume swelling during the use of sodium batteries and improving the cycle life of sodium batteries.

According to some embodiments of the present application, the positive electrode plate, the negative electrode plate, and the separator can be formed into a secondary battery through a winding process or a lamination process. The winding process or lamination process includes, but is not limited to, any conventional process in the field.

The preparation process of the secondary battery provided in the present application does not change the existing sodium battery preparation process and production line, offering high design flexibility.

According to some embodiments of the present application, the positive electrode plate forming the secondary battery includes a positive electrode active material, and the positive electrode active material is at least one of sodium transition metal oxide, polyanionic compound, or Prussian blue compound. In sodium transition metal oxide, the transition metal may be one or more of Mn, Fe, Ni, Co, Cr, Cu, Ti, Zn, V, Zr, and Ce. The sodium transition metal oxide is, for example, $Na_xMO_2$, where M is one or more of Ti, V, Mn, Co, Ni, Fe, Cr, and Cu, and $0 < x \leq 1$. The polyanionic compound includes one or more of sodium vanadium trifluorophosphate $Na_3V_2(PO_4)_2F_3$, sodium vanadium fluorophosphate $NaVPO_4F$, sodium vanadium phosphate $Na_3V_2(PO_4)_3$, $Na_4Fe_3(PO_4)_2P_2O_7$, $NaFePO_4$, or $Na_3V_2(PO_4)_3$. The Prussian blue compound is $Na_xM_1M_2(CN)_6$, where $M_1$ and $M_2$ are one or more of Fe, Mn, Co, Ni, Cu, Zn, Cr, Ti, V, Zr, and Ce, and $0 < x \leq 2$.

The positive electrode active material may also include a binder and/or a conductive agent. The binder and the conductive agent are not limited in type, and may be selected by persons skilled in the art based on actual needs. For example, the binder may be one or more of polyvinylidene fluoride (PVDF), polytetrafluoroethylene (PTFE), polyacrylic acid (PAA), polyvinyl alcohol (PVA), and styrene-butadiene rubber (SBR). The conductive agent may be one or more of graphite, superconducting carbon, acetylene black, carbon black, carbon nanotubes, graphene, and carbon nanofibers.

The negative electrode plate forming the secondary battery includes a carbon-based negative electrode material, a titanium-based oxide negative electrode material, a metal and alloy negative electrode material, and a non-metal elemental material. The carbon-based negative electrode material includes hard carbon and soft carbon. The titanium-based oxide negative electrode material includes titanium dioxide and other optimized materials. The metal and alloy negative electrode material may include tin, antimony, germanium, lead, or the like. The non-metal elemental material includes elemental carbon, and the like.

According to some embodiments of the present application, the electrolyte forming the secondary battery includes a sodium salt and an organic solvent. Specifically, the organic solvent in the electrolyte is not particularly limited, and the organic solvent may be any organic solvent commonly used in the field for electrolytes. As an example, the organic solvent may be selected from at least one of ethylene carbonate, propylene carbonate, diethyl carbonate, dimethyl carbonate, ethyl methyl carbonate, propylene carbonate, methyl acetate, ethyl propionate, fluoroethylene carbonate, diethyl ether, diglyme, triethylene glycol dimethyl ether, tetraethylene glycol dimethyl ether, or tert-butyl methyl ether, with ether solvents preferred to regulate the morphology of sodium ion deposition, thereby inhibiting the extensive growth of sodium dendrites. In the secondary battery of the present application, the sodium salt in the electrolyte is not particularly limited, and the sodium salt may be any sodium salt commonly used in the field for electrolytes. As an example, the sodium salt may be selected from at least one of sodium hexafluorophosphate, sodium bis(fluorosulfonyl)imide, sodium bis(trifluoromethanesulfonyl)imide, sodium trifluoromethanesulfonate, sodium tetrafluoroborate, sodium difluorophosphate, sodium perchlorate, or sodium chloride.

The secondary battery provided in the present application can be used to manufacture an electric device, and the electric device can be used as a power source or an energy storage unit. Such electric device has good application prospects in the fields of power, such as two-wheeled electric vehicles, low-speed electric vehicles, electric ships, buses/coaches, and the like, and/or in the energy storage field, such as for household/industrial energy storage, 5G communication base stations, data centers, and renewable energy integration, and other areas, but are not limited to these fields.

To make the objectives, technical solutions, and advantages of the present application clearer, the separator and secondary battery used in the secondary battery protected by the present application are described in detail below with reference to specific embodiments.

**Examples 1 to 4**

A separator was provided, where the separator included only a base film, the material of the base film was polyethylene, and the thickness H of the separator was between 5 $\mu$m and 30 $\mu$m. The porosity of the first surface of the separator was greater than or equal to 50% and less than or equal to 70%, and the porosity of the second surface was greater than or equal to 30% and less than 50%. The specific parameters for each example are listed in Table 1 below:

**Table 1: List of separator parameters of examples 1 to 4**

| Example | H ($\mu$m) | Porosity of first surface | Porosity of second surface | Distance $h_1$ from first surface, porosity |
|---|---|---|---|---|
| 1 | 5 | 60% | 30% | 0.2H, 55% |
| | | | | 0.4H, 50% |
| | | | | 0.6H, 45% |
| | | | | 0.8H, 40% |
| | | | | 0.9H, 35% |
| 2 | 30 | 70% | 30% | 0.2H, 65% |
| | | | | 0.4H, 50% |
| | | | | 0.6H, 45% |
| | | | | 0.8H, 40% |
| | | | | 0.9H, 35% |
| 3 | 10 | 50% | 35% | 0.2H, 48% |
| | | | | 0.4H, 45% |
| | | | | 0.6H, 42% |
| | | | | 0.8H, 40% |
| | | | | 0.9H, 37% |
| 4 | 25 | 65% | 45% | 0.2H, 60% |
| | | | | 0.4H, 58% |
| | | | | 0.6H, 55% |
| | | | | 0.8H, 50% |
| | | | | 0.9H, 48% |

**Examples 5 to 10**

A separator was provided, where the thickness H of the separator was 5 $\mu$m to 30 $\mu$m. The separator included a base film and one coating located on one side surface of the base film, where the coating formed a composite layer, and the thickness D of the composite layer satisfied: $D < 0.5 \times H$. The material of the base film was a film layer with a porosity of 40% formed by polyimide. The material of the coating was a film layer formed by polyvinylidene fluoride particles on the surface of polyimide, the film layer was filled with aluminum oxide particles at a mass ratio of 90: 10.

The specific parameters for each example are listed in Table 2 below:

**Table 2: List of separator parameters of examples 5 to 10**

| Example | H ($\mu$m) | D ($\mu$m) | Porosity of base film | Porosity of third surface | Distance $h_1$ from first surface, porosity | Porosity of first surface |
|---|---|---|---|---|---|---|
| 5 | 5 | 2 | | 41% | 55% | 70% |

(continued)

| Example | H (μm) | D (μm) | Porosity of base film | Porosity of third surface | Distance $h_1$ from first surface, porosity | Porosity of first surface |
|---|---|---|---|---|---|---|
| 6 | 10 | 4.5 | | 42% | 53% | 65% |
| 7 | 8 | 3 | 40% | 41% | 50% | 60% |
| 8 | 20 | 9 | | 42% | 45% | 50% |
| 9 | 25 | 12 | | 41% | 49% | *55%* |
| 10 | 30 | 10 | | 40% | 45% | 50% |

The distance $h_1$ from the first surface satisfied: $h_1 = 0.5 \times D$.

**Examples 11 to 14**

A separator was provided, where the thickness H of the separator was 5 μm to 30 μm. The separator included a base film and two coatings located on one side surface of the base film, where the two coatings constituted a composite layer, and the thickness D of the composite layer satisfied: $D < 0.5 \times H$. The material of the base film was a film layer with a porosity of 30% formed by polyimide. The material of the first coating was a film layer formed by polyvinylidene fluoride particles on the surface of polyimide, filled with silicon oxide particles at a mass ratio of 95:5. The material of the second coating was a film layer formed by polyvinylidene fluoride particles on the surface of the first coating, filled with aluminum oxide particles at a mass ratio of 90: 10.

The specific parameters for each example are listed in Table 3 below:

**Table 3: List of separator parameters of examples 111 to 14**

| Example | H (μm) | D (μm) | Porosity of base film | Porosity of first coating | Porosity of second coating |
|---|---|---|---|---|---|
| 11 | 5 | 2 | | 40% | 60% |
| 12 | 10 | 4 | 30% | 50% | 70% |
| 13 | 20 | 7 | | 35% | 50% |
| 14 | 30 | 10 | | 40% | 60% |

Sodium batteries were prepared using the separators prepared in the above examples.

A layered oxide was selected as the positive electrode active material for the positive electrode plate, and a CNT coating was selected for the negative electrode plate. The separator, the layered oxide positive electrode plate, and the CNT-coated negative electrode plate were assembled together using a lamination process, and an electrolyte of sodium hexafluorophosphate + triethylene glycol dimethyl ether was injected to form a secondary battery.

Preparation of positive electrode plate:

$Na_3V_2(PO_4)_3$ material was used as a positive electrode, polyvinylidene fluoride as the binder, and conductive carbon black as the conductive agent. These components were mixed uniformly in N-methylpyrrolidone solvent at a mass ratio of 90%:5%:5% to prepare a positive electrode slurry. The positive electrode slurry was applied onto a surface of an aluminum foil using an extrusion coating machine according to the mass per unit area of 30 mg/cm$^2$ of a positive electrode active material and then dried, followed by cold pressing of the coated electrode plate at a designed density of 2.5 g/cm$^3$ with a cold pressing machine.

Preparation of negative electrode plate: A 10 μm thick perforated aluminum foil was used as the negative electrode current collector. A CNT coating was applied onto the surface of the negative electrode current collector using a gravure base coating machine to apply the conductive slurry onto the perforated current collector and dried to obtain the final negative electrode plate.

Preparation of electrolyte: $NaPF_6$ was dissolved in triethylene glycol dimethyl ether to use as the electrolyte.

Assembly of secondary battery: The positive electrode plate, the negative electrode plate, and the separator were overlapped using a winding process to form a square jelly roll. The jelly roll was baked at 100°C to remove moisture, then injected with electrolyte and sealed, followed by processes such as standing, hot and cold pressing, formation, aging, shaping, and capacity testing, to obtain the secondary battery.

**Testing of full-charge thickness rebound rate of separator:**

The original thickness of the separator was measured as H0. The assembled battery was fully charged and then disassembled, the thickness of the separator after full charge was measured as H1. The thickness rebound rate $\alpha$ of the separator was calculated as $\alpha = (H1 - H0) / H0 \times 100\%$. The test results are shown in Table 4.

**Testing of porosity of separator:**

A dried separator sample was cut into a square sample of approximately 20 mm $\times$ 20 mm. The thickness and actual side length were measured using a digital micrometer and vernier caliper to calculate the volume V thereof, and the weight $M_0$ thereof was measured. The square sample was then immersed in the electrolyte, soaked for 2 h at room temperature in an air atmosphere, and removed. The electrolyte liquid adsorbed on the surface was wiped off, and the weight $M_t$ thereof was measured. The porosity of the separator satisfied the following mathematical relationship:

$$\text{Porosity} = \frac{(M_t - M_0)/\rho}{V} \times 100\%$$

**Table 4: List of performance of separator**

| | Base film | | First coating | | Second coating | |
|---|---|---|---|---|---|---|
| | Porosity | Rebound rate | Porosity | Rebound rate | Porosity | Rebound rate |
| Example 5 | 40% | 50% | 55% | 189% | - | - |
| Example 6 | 40% | 50% | 53% | 172% | - | - |
| Example 7 | 40% | 50% | 50% | 145% | - | - |
| Example 8 | 40% | 50% | 45% | 135% | - | - |
| Example 9 | 40% | 50% | 49% | 146% | - | - |
| Example 10 | 40% | 50% | 45% | 135% | - | - |
| Example 11 | 30% | 45% | 40% | 100% | 60% | 200% |
| Example 12 | 30% | 45% | 50% | 145% | 70% | 300% |
| Example 13 | 30% | 45% | 35% | 40% | 50% | 144% |
| Example 14 | 30% | 45% | 40% | 50% | 60% | 200% |

In Table 4, "-" indicates absence.

Testing of performance of Battery:

(1) Capacity retention rate after 300 cycles at 25°C: At 25°C, the first charge and discharge were performed. The battery was charged to 3.65 V at a constant current of 1C, then charged at a constant voltage of 3.65 V until the current reached 0.5C, left standing for 5 min, and discharged to 1.5 V at 1C. The resulting capacity was recorded as the discharge capacity of the first cycle. The charge and discharge cycles were repeated, and the discharge capacity of the 300th cycle was recorded.
The capacity retention rate before and after cycling was calculated according to the formula: Capacity retention rate = (discharge capacity of the 300th cycle / discharge capacity of the first cycle) $\times$ 100%, as shown in Table 5.
(2) Specific capacity after 300 cycles at 25°C: According to the above method for testing the above capacity retention rate, the discharge capacity after the 300th cycle is the specific capacity of the battery, with specific values shown in Table 5.

**Table 5: List of performance of battery of examples 1 to 14**

| Example | Porosity q of separator | Full-charge thickness rebound rate $\alpha$ of separator | Specific capacity after 300 cycles at 25°C (mAh/g) | Capacity retention rate after 300 cycles at 25°C |
|---|---|---|---|---|
| 1 | - | - | 85.26 | 87% |
| 2 | - | - | 83.3 | 85% |
| 3 | - | - | 88.2 | 90% |
| 4 | - | - | 87.22 | 89% |
| 5 | 55% | 190% | 87.22 | 89% |
| 6 | 53% | 170% | 92.12 | 94% |
| 7 | 50% | 147% | 90.16 | 92% |
| 8 | 50% | 146% | 89.18 | 91% |
| 9 | 45% | 137% | 88.2 | 90% |
| 10 | 45% | 135% | 85.26 | 87% |
| 11 | 43% | 110% | 90.16 | 92% |
| 12 | 50% | 145% | 94.08 | 96% |
| 13 | 40% | 100% | 91.14 | 93% |
| 14 | 43% | 109% | 87.22 | 89% |

In Table 5, "-" indicates absence.

**Comparative Examples 1 to 6**

A separator was provided, differing from the above examples in that the pore structure of the separator was uniformly distributed internally.

Comparative Example 1 differed from Example 4 in that the porosity was 40%.

Comparative Example 2 differed from Example 9 in that the porosity was 40%.

Comparative Example 3 differed from Example 14 in that the porosity was 30%.

Comparative Example 4 differed from Example 14 in that the thickness of the composite layer was 15 $\mu$m, and the porosity was 30%.

Comparative Example 5 differed from Example 14 in that the thickness of the composite layer was 17 $\mu$m, and the porosity was 30%.

Comparative Example 6 differed from Example 14 in that the thickness of the composite layer was 20 $\mu$m, and the porosity was 40%.

The specific parameters are listed in Table 6, and the performance of the battery obtained using the same assembly and testing methods as above is shown in Table 7.

**Table 6: List of separator parameters of Comparative Examples 1 to 6**

| Comparative Example | H ($\mu$m) | D ($\mu$m) | Porosity of base film | Porosity of coating |
|---|---|---|---|---|
| 1 | 25 | - | 40% | - |
| 2 | 25 | 12 | 40% | 40% |
| 3 | 30 | 10 | 30% | 30% |
| 4 | 30 | 15 | 30% | 30% |
| 5 | 30 | 17 | 30% | 30% |
| 6 | 30 | 20 | 30% | 30% |

The separators of Comparative Examples 1 to 6 were subjected to the same battery assembly techniques and performance tests as the examples, and the performance was shown in Table 7 below.

**Table 7: List of performance of battery of Comparative Examples 1 to 6**

| Comparative Example | Full-charge thickness rebound rate of separator | Specific capacity after 300 cycles at 25°C (mAh/g) | Capacity retention rate after 300 cycles at 25°C |
|---|---|---|---|
| 1 | 50% | 79.3 | 75% |
| 2 | 44% | 75.26 | 77% |
| 3 | 43% | 78.4 | 80% |
| 4 | 44% | 80.36 | 81% |
| 5 | 42% | 81.34 | 82% |
| 6 | 45% | 80.3 | 81% |

It can be seen from Tables 4 to 7 that, for separator with a gradient porosity distribution, the rebound rate of the separator after full charge increases, that is, the swelling of the separator increases, which can suppress negative electrode swelling to some extent. Compared to secondary batteries without the separator of the present application, secondary batteries containing the separator of the present application show prolonged cycle life. This may be because the separator has a certain rigidity, facilitating its ability to resist swelling and deformation of the positive and negative electrode plates to a certain extent, while also having a certain compressibility, effectively ensuring sufficient infiltration of an electrolyte, thereby mitigating the rapid degradation of the cycle life of a battery caused by volume swelling during the use of the sodium battery.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

**Claims**

1.   A separator for a sodium battery, **characterized in that** the separator has a first surface and a second surface along its thickness direction, and a porosity of the separator decreases gradually from the first surface to the second surface.

2.   The separator according to claim 1, **characterized in that** a porosity of the first surface is greater than or equal to 50% and less than or equal to 70%, and a porosity of the second surface is greater than or equal to 30% and less than 50%.

3.   The separator according to claim 1 or 2, **characterized in that** a thickness H of the separator is 5 $\mu$m to 30 $\mu$m.

4.   The separator according to any one of claims 1 to 3, **characterized in that** the porosity of the separator is denoted as q, and the separator has a full-charge thickness rebound rate $\alpha$, satisfying any one of the following:

(1)

$$30\% \leq q \leq 40\%, \text{ and } \alpha \leq 100\%;$$

(2)

$$40\% < q < 60\%, \text{ and } 100\% < \alpha < 200\%;$$

and
(3)

$$60\% \leq q \leq 70\%, \text{ and } \alpha \geq 200\%.$$

**5.** The separator according to any one of claims 1 to 4, **characterized in that** the separator comprises a base film.

**6.** The separator according to any one of claims 1 to 5, **characterized in that** the separator comprises a base film and a composite layer located on one side surface of the base film, wherein the porosity of the base film is less than a porosity of the composite layer.

**7.** The separator according to claim 6, **characterized in that** the composite layer comprises one or more coatings.

**8.** The separator according to claim 6 or 7, **characterized in that** the composite layer comprises one coating, the coating having a third surface close to the base film, wherein a porosity of the coating decreases gradually from the first surface to the third surface.

**9.** The separator according to claim 8, **characterized in that** the porosity $q_1$ of the base film is 30% to 40%, and a full-charge thickness rebound rate $\alpha_1$ of the base film is less than or equal to 100%;
and/or;
a porosity $q_2$ of the coating is 40% to 70%, and a full-charge thickness rebound rate $\alpha_2$ of the coating is greater than or equal to 100%.

**10.** The separator according to claim 6 or 7, **characterized in that** the composite layer comprises two or more coatings, the porosity of the base film is less than the porosity of the coating closest to the base film, and the porosity of the coating closest to the base film is less than the porosity of the coating away from the base film.

**11.** The separator according to claim 10, **characterized in that** the porosity $q_1'$ of the base film is 30% to 40%, and the full-charge thickness rebound rate $\alpha_1'$ of the base film is less than or equal to 100%;
and/or;

a porosity $q_2'$ of the coating closest to the base film is 35% to 50%, and a full-charge thickness rebound rate $\alpha_2'$ of the coating closest to the base film satisfies: $90\% \leq \alpha_2' \leq 180\%$;
and/or;
a porosity $q_3'$ of the coating away from the base film is 50% to 70%, and a full-charge thickness rebound rate $\alpha_2'$ of the coating away from the base film is greater than or equal to 180%.

**12.** The separator according to any one of claims 5 to 11, **characterized in that** a thickness D of the composite layer and the thickness H of the separator satisfy: $D < 0.5 \times H$.

**13.** A secondary battery, **characterized by** comprising:

a positive electrode plate;
a negative electrode plate;
an electrolyte; and
the separator according to any one of claims 1 to 12;
wherein the first surface of the separator is close to the negative electrode plate, and the second surface is close to the positive electrode plate.

**14.** An electric apparatus, **characterized in that** the electric apparatus comprises the separator according to any one of claims 1 to 12 or the secondary battery according to claim 13.

FIG. 1

FIG. 2

FIG. 3

FIG. 4

FIG. 5

FIG. 6

## INTERNATIONAL SEARCH REPORT

| International application No. |
|---|
| **PCT/CN2024/072054** |

**A.    CLASSIFICATION OF SUBJECT MATTER**

H01M 50/491(2021.01)i

According to International Patent Classification (IPC) or to both national classification and IPC

**B.    FIELDS SEARCHED**

Minimum documentation searched (classification system followed by classification symbols)

IPC/CPC: H01M

Documentation searched other than minimum documentation to the extent that such documents are included in the fields searched

Electronic data base consulted during the international search (name of data base and, where practicable, search terms used)

CNTXT, WPABS, ENTXTC, DWPI, VEN, CNKI: 电池, 电解液, 正极, 负极, 电极, 隔膜, 间隔件, 隔板, 钠, 孔隙率, 梯度, 渐变, 变化, 升高, 降低, 增大, 减小, 厚度方向, battery, electrolyte, cathode, anode, separator, layer, porous, rate, porosity, decrease

**C.    DOCUMENTS CONSIDERED TO BE RELEVANT**

| Category* | Citation of document, with indication, where appropriate, of the relevant passages | Relevant to claim No. |
|---|---|---|
| X | JP 2009211949 A (NISSAN MOTOR CO., LTD.) 17 September 2009 (2009-09-17)<br>claims 1-14 | 1-14 |
| X | JP 2002319386 A (SONY CORP.) 31 October 2002 (2002-10-31)<br>description, paragraphs 12-54 | 1-14 |
| X | WO 2012120579 A1 (PANASONIC CORP. et al.) 13 September 2012 (2012-09-13)<br>description, paragraphs 7-51 | 1-14 |
| X | CN 106654351 A (PANASONIC INTELLECTUAL PROPERTY MANAGEMENT CO., LTD.) 10 May 2017 (2017-05-10)<br>description, paragraphs 42-67 | 1-14 |
| A | CN 102544417 A (GM GLOBAL TECHNOLOGY OPERATIONS LLC) 04 July 2012 (2012-07-04)<br>entire description | 1-14 |
| A | CN 114583174 A (SVOLT ENERGY TECHNOLOGY CO., LTD.) 03 June 2022 (2022-06-03)<br>entire description | 1-14 |

☑ Further documents are listed in the continuation of Box C.    ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **21 March 2024** | **27 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/072054**

### C. DOCUMENTS CONSIDERED TO BE RELEVANT

| Category* | Citation of document, with indication, where appropriate, of the relevant passages | Relevant to claim No. |
|---|---|---|
| A | CN 114784462 A (SINOMA LITHIUM FILM (CHANGDE) CO., LTD.) 22 July 2022 (2022-07-22) <br> entire description | 1-14 |
| A | CN 115810874 A (NINGDE CONTEMPORARY AMPEREX TECHNOLOGY CO., LTD.) 17 March 2023 (2023-03-17) <br> entire description | 1-14 |
| A | US 2019273258 A1 (SAMSUNG ELECTRONICS CO., LTD.) 05 September 2019 (2019-09-05) <br> entire description | 1-14 |

Form PCT/ISA/210 (second sheet) (July 2022)

## INTERNATIONAL SEARCH REPORT
### Information on patent family members

International application No.

**PCT/CN2024/072054**

| Patent document cited in search report | | | Publication date (day/month/year) | Patent family member(s) | | | Publication date (day/month/year) |
|---|---|---|---|---|---|---|---|
| JP | 2009211949 | A | 17 September 2009 | None | | | |
| JP | 2002319386 | A | 31 October 2002 | JP | 3680759 | B2 | 10 August 2005 |
| WO | 2012120579 | A1 | 13 September 2012 | JP | 2014102877 | A | 05 June 2014 |
| CN | 106654351 | A | 10 May 2017 | JP | 2017084765 | A | 18 May 2017 |
| | | | | JP | 6604479 | B2 | 13 November 2019 |
| CN | 102544417 | A | 04 July 2012 | US | 2014374937 | A1 | 25 December 2014 |
| | | | | US | 9564622 | B2 | 07 February 2017 |
| | | | | DE | 102011121246 | A1 | 14 February 2013 |
| | | | | US | 2012156568 | A1 | 21 June 2012 |
| | | | | US | 8835058 | B2 | 16 September 2014 |
| CN | 114583174 | A | 03 June 2022 | None | | | |
| CN | 114784462 | A | 22 July 2022 | None | | | |
| CN | 115810874 | A | 17 March 2023 | None | | | |
| US | 2019273258 | A1 | 05 September 2019 | US | 10840513 | B2 | 17 November 2020 |
| | | | | KR | 20190106727 | A | 18 September 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023104909281